# EUROPÄISCHE PATENTANMELDUNG

(11) **EP 3 253 073 A1**
(43) Veröffentlichungstag der Anmeldung: **06.12.2017**
(21) Anmeldenummer: 17165565.7
(22) Anmeldetag: 07.04.2017
(51) Int. Cl.: H04R 25/00

(54) **VERFAHREN ZUR AUTOMATISIERTEN ERMITTLUNG VON PARAMETERWERTEN FÜR EIN HÖRHILFEGERÄT**

(30) Priorität: 30.05.2016 DE 102016209329
(71) Anmelder: Sivantos Pte. Ltd., Singapore 139959 (SG)
(72) Erfinder: ASCHOFF, Stefan, 90542 Eckental (DE)
(74) Vertreter: FDST Patentanwälte

(57) **Zusammenfassung**

Die Erfindung betrifft ein Verfahren, welches die Ermittlung von Parameterwerten eines Hörhilfegerätes für eine nutzerspezifische Hörsituation erleichtert. Dies wird durch ein Verfahren erreicht, bei welchem Blogeinträge eines Trägers eines Hörhilfegerätes automatisiert ausgewertet und anhand der Auswertung angepasste Parameterwerte ermittelt werden.

## Beschreibung

Hörhilfegeräte sind tragbare Hörvorrichtungen, die zur Versorgung von Minderhörenden dienen. Die klassischerweise als "Hörgeräte" bezeichneten Hörhilfegeräte sind für Minderhörende vorgesehen, die im medizinischen Sinne an einem Hörverlust leiden. Um deren zahlreichen individuellen Bedürfnissen entgegenzukommen, werden unterschiedliche Bauformen von Hörhilfegeräten wie Hinter-dem-Ohr-Hörgeräte (HdO), Hörgeräte mit externem Hörer (RIC, Receiver in the Canal), Indem-Ohr-Hörgeräte (IdO), oder auch Concha-Hörgeräte oder Kanal-Hörgeräte (ITE, CIC) angeboten. Die beispielhaft aufgeführten Hörgeräte werden am Außenohr oder im Gehörgang getragen. Darüber hinaus stehen auf dem Markt auch Knochenleitungshörhilfen, implantierbare oder vibrotaktile Hörhilfen zur Verfügung. Bei diesen erfolgt die Stimulation des geschädigten Gehörs entweder mechanisch oder elektrisch.

Neuerdings gibt es zusätzlich zu den vorbeschriebenen klassischen Hörgeräten Hörhilfegeräte zur Unterstützung von normal hörenden Menschen, auch "Personal Sound Amplification Products" oder "Personal Sound Amplification Devices" genannt. Diese Hörhilfegeräte sind nicht zur Kompensation von Hörverlusten vorgesehen - dieses zu versuchen könnte das Hörvermögen möglicherweise sogar schädigen - sondern werden zur Unterstützung in spezifischen oder schwierigen Hörsituationen eingesetzt.

Beispielsweise können solche Hörhilfegeräte zur Unterstützung von Jägern auf der Jagd, die speziell Beutetiere hören wollen, oder auch bei der Beobachtung von Vögeln genutzt werden. Weiter dienen derartige Hörhilfegeräte der Unterstützung des Sprachverstehens zum Beispiel in sogenannten "Cocktail Party"-Situationen; für Sportreporter, die in einem Stadion telefonieren wollen, oder für Violinisten, die während ihrer Übungen die spektralreinen Violinentöne dämpfen wollen, um die Dauerbelastung ihres Gehöres zu reduzieren.

Unabhängig von ihrem Träger besitzen Hörhilfegeräte als wesentliche Komponenten prinzipiell einen Eingangswandler, einen Verstärker und einen Ausgangswandler. Als Eingangswandler ist in der Regel ein akusto-elektrischer Wandler, beispielsweise ein Mikrofon, und/oder ein elektromagnetischer Empfänger, beispielsweise eine Induktionsspule eingesetzt. Der Ausgangswandler ist meist als elektroakustischer Wandler, zum Beispiel als ein Miniaturlautsprecher, oder als ein elektromechanischer Wandler, wie ein Knochenleitungshörer, realisiert. Der Verstärker ist üblicherweise in eine Signalverarbeitungseinrichtung integriert.

Hörhilfegeräte werden von den jeweiligen Herstellern mit sehr umfangreichen Verarbeitungsmechanismen bezüglich der akustischen Signalverarbeitung ausgestattet. Dabei sind mittels der Werte einer Vielzahl von Parametern die umfangreichen Details verschiedener Signalverarbeitungseigenschaften wie zum Beispiel der Verstärkung, der Dynamikkompression, des Richtmikrofons, der Anhebung des Spektralbereichs von Sprache, der Feedback-Unterdrückung und der Unterdrückung von Störgeräuschen (beispielsweise Eigenrauschen der Mikrofone oder Rauschen durch Wind) einstellbar.

Die Parametrierbarkeit moderner Hörsysteme, also sowohl von klassischen Hörgeräten, als auch von Hörhilfegeräten für Normalhörende ist mit mehreren tausend Parametern dabei bereits in den Bereich medizinischer Großsysteme wie etwa Computertomographen oder Kernspintomographen vorgestoßen. Die Mehrzahl dieser Parameter ist in sinnvoller Weise nur noch durch den Hersteller der Hörsysteme einstellbar, kann aber die vom Träger des jeweiligen Hörhilfegerätes wahrgenommene Hörqualität entscheidend beeinflussen. Nur ein kleiner Anteil der Parameterwerte wie beispielsweise die Verstärkung oder eine Klangwaage zur Hervorhebung hoher und/oder tiefer Töne ist für Minderhörende überhaupt verständlich und sinnvoll einstellbar.

Üblicherweise werden die Parameter eines Hörhilfegerätes in einem Vorgang, dem sogenannten "Fitting", von einem Hörgeräteakustiker ("HCP", Hearing Care Professional) spezifisch für den jeweiligen Nutzer, also den Hörhilfegeräteträger angepasst. Dabei wird aufgrund von Messungen des Hörvermögens des Hörhilfegeräteträgers, den sogenannten Audiogrammen, sowie unter Berücksichtigung der akustischen Eigenschaften des Hörhilfegeräts dieses derart eingestellt, dass sich für den Träger eine möglichst gute Verständlichkeit von Gesprächen, sowie ein möglichst natürlicher Höreindruck ergeben.

Eine einmalige Anpassung eines Hörhilfegerätes an das Hörvermögen des Minderhörenden ist aber üblicherweise nicht ausreichend, um das Hörhilfegerät auch für den Alltagsgebrauch einzustellen. Die alltäglichen Hörsituationen können in den Räumlichkeiten des Akustikers, in dem der Minderhörende sein Hörgerät erhält, nicht umfänglich nachgestellt werden. Viele Minderhörende, die ein Hörgerät tragen, begeben sich nach der erstmaligen Anpassung ihres Hörgerätes durchschnittlich drei bis vier Mal zu einem Akustiker, um weitere Nachanpassungen vornehmen zu lassen. Zum Teil sind auch noch häufigere Besuche von bis zu acht Mal notwendig.

Zudem muss ein Minderhörender, insbesondere dann, wenn er bis zur Ausstattung mit einem Hörgerät bereits längere Zeit schlecht gehört hat, das Hören und vor allem das Sprachverstehen teilweise wieder neu erlernen, da das Gehirn in einer Phase längerer fehlender Beanspruchung Fähigkeiten verlernt, was auch für die Fähigkeit gilt, Sprache zu verstehen. Dies trifft insbesondere auf Altersschwerhörige zu, die über Jahre hinweg schlecht hören, bis sie durch die Hilfe von Familienangehörigen zu einem Akustiker begleitet werden.

Um die Anpassung von Hörgeräten zu erleichtern, und die Häufigkeit notwendiger Anpassungssitzungen bei einem Akustiker zu verringern, kann mittlerweile auf internetbasierte Technologien zurückgegriffen werden. Die Nutzung internetbasierter Plattformen, also sozialer Netzwerke, Internetforen und Weblogs ist inzwischen weit verbreitet. Insbesondere junge Menschen integrieren diese ganz selbstverständlich in ihren Alltag. Ein Weblog oder kurz ein Blog ist ein auf einer Website im Internet geführtes und damit meist öffentlich einsehbares Tagebuch und wird beispielsweise als ein Medium zur öffentlichen Darstellung von Aspekten des eigenen Lebens und von Meinungen zu spezifischen Themen genutzt. Die Blogeinträge, auch Postings, Blogpostings oder Posts genannt, sind die Artikel in Textform, welche die Hauptbestandteile des jeweiligen Weblogs darstellen.

Es ist bereits das Schlagwort vom "Web 2.0" bekannt, welches beschreibt, dass sich der heutige Internetnutzer von 'Konsumenten' zum 'Prosumenten' wandelt, also nicht nur Daten konsumiert, sondern eben auch Daten produziert. Die Verbreitung solcher Informationstechnologien eröffnet auch zunehmende Möglichkeiten in der Versorgung und Betreuung mit medizinischen Produkten und Dienstleistungen.

So ist es mittlerweile leicht möglich, umweltbezogene und/oder personenbezogene Daten aufzuzeichnen und auszuwerten, um einen Erkenntnisgewinn bezüglich der Lebensumstände des jeweiligen Nutzers zu erzielen. Insbesondere gesundheitliche Fragestellungen sind hierbei vermehrt von Interesse. Zur Aufzeichnung nutzerspezifischer Daten werden beispielsweise Geräte genutzt, die mittels Sensoren Körperfunktionen oder auch Umgebungsdaten aufnehmen. Diese Daten können dann von dem Nutzer selbsttätig beispielsweise auf einer entsprechenden internetbasierten Plattform zur Verfügung gestellt und/oder in einem Blog protokolliert werden.

Alternativ können solche nutzerspezifischen Daten direkt an entsprechende Datenbanken weitergeleitet und dort ausgewertet werden. Die Ergebnisse lassen sich beispielsweis zur Erstellung eines Gesundheitsprofils, zur Ernährungsüberwachung oder zur Fitnesskontrolle nutzen. Patienten werden künftig viel mehr aktiv fordern, welche Daten über sie ausgewertet werden können und sollten. Vor allem, wenn davon bessere Therapieansätze erhofft werden.

Auch für Träger von Hörhilfegeräten - unabhängig davon ob sie als Minderhörende "klassische" Hörgeräte tragen oder als Normalhörende ein Hörhilfegerät lediglich zu gezielten Unterstützung in spezifischen Hörsituationen verwenden - bieten solche internetbasierten Technologien bzw. die entsprechenden Plattformen interessante Möglichkeiten. Durch deren zunehmende Verbreitung werden neue Lösungskonzepte möglich. Der Minderhörende und der Akustiker müssen sich zum Zwecke der Anpassung eines Hörgerätes nicht notwendiger Weise am gleichen Ort befinden.

Stattdessen können sie mit internetfähigen Programmen und Geräten, wie beispielsweise Apps auf sogenannten 'mobile devices' wie Smartphones ausgeführt werden, ausgestattet sein. Sowohl eine Erstanpassung, als auch möglicherweise notwendige Nachanpassungen, sogenannte "Follow-Up Fittings", können durchaus bei einer räumlichen Trennung des Minderhörenden und des Akustikers erfolgen.

Zudem gibt es eine zunehmende Verbreitung von sogenannten "Cloud"-Technologien: Die Anbieter von Softwaretechnologien, wie beispielsweise Amazon oder Microsoft errichten vermehrt große Rechenzentren und bieten Herstellern von branchenspezifischen Softwareprodukten an, deren Lösungen gegen eine Art Mietgebühr in den Rechenzentren zu platzieren ("hosten"). Somit stehen auch Herstellern von Softwaresystemen zum Zwecke der Anpassung von Hörsystemen Rechenzentren zur Verfügung, auf denen sie Teile ihrer eigens entwickelten Softwaresysteme als sogenanntes "Back-End" bereitstellen können. Diese Teile sind dann über Internetverbindungen für die "Front-End"-Teile, also die Teile des Softwaresystems, die auf mobilen Endgeräten wie Smartphones ablaufen, nutzbar.

Solche branchenspezifischen Softwaresysteme sind üblicherweise adäquat aufgeteilt. In dem Back-End werden rechenintensive Lösungsalgorithmen platziert oder auch Datenbanken, die umfangreiche Datenmengen bewältigen. Gängigerweise wird das Back-End auch dafür genutzt, Möglichkeiten zum Download von Softwareprogrammen zur Verfügung zu stellen, so dass sie von den mobilen Endgeräten aus bezogen und dort ausgeführt werden können.

Die Front-End-Teile des Softwaresystems übernehmen dagegen solche Aufgaben, die eine Nutzer-Interaktion erfordern und eine entsprechende Nutzeroberfläche ("user interface"), auch MMI ("Man Machine Interface") genannt, zur Verfügung stellen. Geläufig ist hier der Begriff der "Apps" (Applications, Anwendungen), die auf Smartphones zu Anwendung kommen.

Die Anpassung von Parametern eines Hörhilfegerätes kann unter Nutzung vorbe-schriebener internetbasierter Technologien beispielsweise mit Hilfe formalisierter Eingabemöglichkeiten, also Eingabemöglichkeiten an einer vorab definierten Eingabemaske, erfolgen. Hierzu werden zumeist gängige Anpassprogramme für die entsprechenden Hörhilfegeräte oder auch html/ Web-Formulare genutzt, die einen Fragenkatalog mit vordefinierten Auswahlmöglichkeiten implementieren. Die von einem Träger eines Hörhilfegerätes getätigten Eingaben können dann einer weiteren Verarbeitung zugeführt und zur Anpassung von Parameterwerten des Hörhil-fegerätes genutzt werden.

Allerdings ist es bei solchen formalisierten Eingabemöglichkeiten aufgrund der vordefinierten Auswahlmöglichkeiten nicht möglich, jede nutzerspezifische Hörsituation detailliert zu erfassen. Entsprechend können subjektive Höreindrücke eines Hörhilfegeräteträgers nur bedingt berücksichtigt werden.

Aus der Druckschrift CA 2 399 929 A1 sind ein Anpasssystem für eine Hörgerät und ein entsprechendes Verfahren zur Anpassung eines Hörgerätes an die Bedürfnisse eines Individuums bekannt. Das Anpasssystem umfasst eine Eingabevorrichtung, die über ein Kabel oder/oder mittels einer drahtlosen Verbindung mit einer Steuereinheit am Hörgerät verbunden ist. Als Eingabevorrichtung wird ein Mobiltelefon genutzt, über welches manuell oder durch Sprache benutzerspezifische Daten an einen Server übermittelt und ausgehend von diesem Modifikationen und Änderungen von Hörgeräteparametern vorgenommen werden.
Aus der DE 10 2009 043 775 A1 ist ein Verfahren zum Einstellen einer Hörvorrichtung und insbesondere eines Hörgerätes und/oder Tinnitus-Maskers bekannt, bei welchem ein Sprachsignals eines Benutzers erfasst und erkannt wird, das Sprachsignal zum Erkennen eines emotionalen Zustandes des Benutzers analysiert wird und mindestens ein Parameter der Hörvorrichtung in Abhängigkeit des erkannten emotionalen Zustandes eingestellt wird. Dabei wird der augenblickliche emotionale Zustand anhand eines von dem Benutzer ausgehenden Sprachsignals festgestellt, wozu gemäß der DE 10 2009 043 775 A1 auf bekannte Algorithmen zur Sprachanalyse zurückgegriffen wird.

Die DE 10 2007 035 175 A1 offenbart ein Verfahren zum Gewinnen von individuellen Hörsituationsdaten eines Nutzers einer Hörvorrichtung durch Tragen eines Aufzeichnungsgerätes durch den Nutzer in einer individuellen Hörsituation, Gewinnen von Messdaten betreffend die Hörsituation durch das Aufzeichnungsgerät und Aufzeichnen von Daten durch das Aufzeichnungsgerät. Hierzu ist in dem Aufzeichnungsgerät ein perzeptives Modell implementiert ist, um aus den Messdaten psychoakustische Daten zu gewinnen, wobei die die psychoakustischen Daten von dem Aufzeichnungsgerät aufgezeichnet werden.

Der Erfindung liegt als Aufgabe zugrunde, ein Verfahren anzugeben, welches die Ermittlung von einer spezifischen Hörsituation zugehörigen optimalen Parameterwerten eines Hörgerätes erlaubt.

Die gestellte Aufgabe der Erfindung wird erfindungsgemäß gelöst durch ein Verfahren zur automatisierten Ermittlung von Parameterwerten für ein Hörhilfegerät, wobei ein nutzerspezifischer Blogeintrag in einem Weblog computerlinguistisch analysiert wird, wobei die Ergebnisse der computerlinguistischen Analyse auf solcher Ergebnisse reduziert werden, die auf die subjektive Hörwahrnehmung des Nutzers gerichtet sind, wobei die auf die subjektive Hörwahrnehmung des Nutzers gerichteten, reduzierten Ergebnisse einer spezifischen Hörsituation zugeordnet werden, wobei aus den auf die subjektive Hörwahrnehmung des Nutzers gerichteten, reduzierten Ergebnissen nutzerspezifische Änderungswünsche extrahiert werden, und wobei anhand der nutzerspezifischen Änderungswünsche der spezifischen Hörsituation angepasste Parameterwerte ermittelt werden, die dem Nutzer zur Anpassung von der spezifischen Hörsituation zugeordneten Parameterwerten des Hörhilfegeräts angeboten werden.

In einem ersten Schritt basiert die Erfindung auf der Tatsache, dass insbesondere Weblogs bzw. die entsprechenden Blogeinträge aufgrund der Vielzahl möglicher enthaltener nutzerspezifischer Informationen grundsätzlich eine gute Basis zur personenspezifischen Datengewinnung darstellen. Bei der Nutzung eines Blogs, der sich mit gesundheitlichen Fragestellungen beschäftigt, besteht so die Möglichkeit, Rückschlüsse auf den Gesundheitszustand des jeweiligen Verfassers zu ziehen. Allerdings eignen sich derartige Blogeinträge nicht unmittelbar für eine automatisierte Weiterverarbeitung der Daten, da Blogeinträge in Fließtext oder auch Klartext, also in freiem Text verfasst werden.

In einem zweiten Schritt geht die Erfindung von der Überlegung aus, dass eine Auswertung von Fließtexten mittels einer klassischen Sprachanalyse erfolgen könnte. Mittels einer Sprachanalyse können nämlich Inhalte und Zusammenhänge eines zugrundeliegenden Textes herausgefiltert werden. Auch bei Internetseiten kann auf solche Sprachanalysen zurückgegriffen werden, um so Schlüsselwörter in Texten automatisch zu ermitteln, Stimmungen und Diskussionen zu erfassen, Personennamen zu erkennen und auch Dokumente automatisch zu klassifizieren bzw. bestimmten Themenbereichen zuzuordnen. Entsprechend ist es auf diese Weise möglich, auch Weblogs sprachlich zu analysieren.

In einem dritten Schritt kombiniert die Erfindung nun diese beiden Tatsachen um aus einem Weblog bzw. einem entsprechenden Blogeintrag nutzerspezifische Daten zu gewinnen, indem dieser einer computerlinguistischen Analyse unterzogen wird. Anhand der nutzerspezifischen Daten können Vorschläge oder Maßnahmen ermittelt werden, die beispielsweise unmittelbar zur Behandlung einer medizinischen Fragestellung dienen. Im Hinblick auf einen bloggenden Träger eines Hörhilfegerätes bedeutet dies, dass dieser beim Verfassen eines Blogeintrags Daten zur Verfügung stellen kann, die seine Höreindrücke bzw. Hörwahrnehmungen in verschiedenen Lebenssituationen protokollieren. Diese Einträge werden dann mittels der computerlinguistischen Analyse spezifisch für den jeweiligen Träger des Hörhilfegerätes ausgewertet.

Die Ergebnisse der computerlinguistischen Analyse werden auf solche Ergebnisse reduziert, die auf die subjektive Hörwahrnehmung des Nutzers gerichtet sind. Die reduzierten Ergebnisse werden schließlich einer spezifischen Hörsituation, also einer Hörintention zugeordnet und aus den reduzierten Ergebnissen nutzerspezifische Änderungswünsche extrahiert. Die nutzerspezifischen Änderungswünsche, die zweckmäßigerweise auf die Hörsituation bezogene Beschwerden oder Wünsche wiedergeben, liegen vorzugsweise formalisiert vor.

Anhand der extrahierten nutzerspezifischen Änderungswünsche werden der spezifischen Hörsituation angepasste Parameterwerte - also Verbesserungsvorschläge - ermittelt werden, die dem Nutzer zur Anpassung von der spezifischen Hörsituation zugeordneten Parameterwerten des Hörgeräts angeboten werden.

Das Verfahren ermöglicht es somit, anhand von Blogeinträgen geänderte Parameterwerte eines Hörhilfegerätes zu ermitteln, die an den Wünschen des jeweiligen Hörhilfegeräteträgers ausgerichtet sind. Der Blogeintrag eines Trägers wird nicht mehr lediglich dazu genutzt, sich der Umwelt mitzuteilen, sondern lässt sich dank der computerlinguistischen Analyse ganz spezifisch hinsichtlich möglicher Verbesserungsvorschläge für die Feineinstellung ("follow-up fittings") seines Hörgerätes in einer spezifischen Hörsituation auswerten. Das Verfahren wird insbesondere vollautomatisch durchgeführt.

Weiter bevorzugt werden die der spezifischen Hörsituation angepassten Parameterwerten anhand von Berechnungsalgorithmen ermittelt. Als Eingabedaten für die Berechnungsalgorithmen werden vorzugsweise zusätzlich zu den nutzerspezifischen Änderungswünschen und den aktuellen Parameterwerten die Daten medizinischer Befunde des Nutzers verwendet. Typische Befunde sind beispielsweise auf das Hörvermögen gerichtete Daten, aber auch Alter, Geschlecht oder die Muttersprache.

Der Vorteil der Berücksichtigung medizinischer Befunde durch lässt sich anhand eines Vergleiches zwischen einem geringen und einem starken Hörverlust verdeutlichen. Der Einstellungsspielraum für die Verstärkung ist bei einer Person mit großem Hörverlust geringer, da die verbleibende Differenz bis zur Unbehaglichkeitsschwelle geringer ist. Eine zu einem bestimmten Zweck vorzunehmende Anhebung oder Absenkung der Verstärkung muss daher für eine Person mit großem Hörverlust in kleineren Intervallen vorgenommen werden, als für eine Person mit einem geringen Hörverlust

Unter einer spezifischen Hörsituation wird hierbei eine klassifizierbare Hörsituation verstanden, also eine solche Situation, die einer typischen alltäglichen Hörsituation als zugehörig zugeordnet werden kann. Befindet sich der Hörgeräteträger in einer bestimmten Hörumgebung, so können sich in dieser Hörumgebung mehrere Situationen ereignen, in welchen sich der Träger eine veränderte Hörwahrnehmung erwünscht.

Klassische Hörumgebungen sind beispielsweise Ruheraum, Straßenverkehr, Restaurant (hier liegt oft die typische "Cocktail-Party-Situation" vor), Konzertsaal usw. Den Hörsituationen sind typischerweise Hörintentionen zugeordnet oder überlagert, die für dem Vorgang des subjektiven Hörens bekannt sind. Beispiele für solche Hörintentionen sind Sprachverstehen, Musikgenuss, Richtungshören. Unterdrückung von Windgeräuschen oder ähnliches. Insbesondere solche Intentionen und/oder Hörsituationen lassen sich mittels einer computerlinguistischen Analyse aus einem Texteintrag analysieren und als Ergebnis darstellen.

Die der spezifischen Hörsituation angepassten Parameterwerte werden vorzugsweise dem Träger des Hörhilfegerätes selbst zur Programmierung seines Hörgeräts angeboten. Dieser hat dann die Wahl, die entsprechenden Vorschläge wahlweise zu übernehmen oder zu verwerfen.

Weiter bevorzugt werden die angepassten Parameterwerte einem Hörgeräteakustiker zur Verfügung gestellt. Der Hörgeräteakustiker kann die angepassten Parameterwerte dann im Rahmen einer Beratungssitzung und/oder einer Anpassungssitzung gemeinsam mit dem Träger der entsprechenden Hörhilfe besprechen, auswerten und dann - nach gegebenenfalls weiterer Anpassung - auf das Hörhilfegerät übertragen. Selbstverständlich ist es auch möglich, dass der Träger die entsprechenden Vorschläge zuerst übernimmt, und zusätzlich einen Hörgeräteakustiker aufsucht, um gegebenenfalls weitere Anpassungen bzw. Änderungen vorzunehmen. In einer vollautomatisierten Alternative werden die ermittelten und angepassten Parameterwerte unmittelbar auf das Hörhilfegerät des Benutzers übertragen.

In einer vorteilhaften Ausgestaltung der Erfindung werden beim Erstellen des nutzerspezifischen Blogeintrags die dem Blogeintrag zugeordneten Parameterwerte des Hörhilfegerätes gespeichert. Als Parameterwerte des Hörhilfegerätes werden also die Parameter gespeichert, die ursprünglich zum Zeitpunkt einer in dem Blogeintrag beschriebenen Situation, also der erlebten Hörsituation, in dem Hörhilfegerät eingestellt sind bzw. waren.

Besonders bevorzugt werden beim Erstellen des Blogeintrages die aktuellen Parameterwerte des Hörgerätes gespeichert. Die Speicherung der aktuellen Parameterwerte erfolgt vorzugsweise unmittelbar. Wird der Blogeintrag unmittelbar zum Zeitpunkt des Erlebens einer bestimmten Situation verfasst, so werden die aktuellen Parameterwerte zugrunde gelegt, gespeichert und weiterverwendet. Da die Parameterwerte die Signalverarbeitungseigenschaften des Hörgerätes ausmachen, können diese dann in der nachfolgenden Weiterverwendung mittels adäquater Änderungsvorschläge angepasst werden.

Insbesondere hat der Träger des Hörhilfegerätes die Möglichkeit einen Blogeintrag zeitverzögert zur Hörsituation zu erstellen. In diesem Fall erfolgt die Erfassung der Parameterwerte und des Blogeintrages in zwei getrennten Schritten. Um dieses dem bloggenden Hörhilfegeräteträger zu ermöglichen, genügt es, das zur Erstellung des Blogeintrages genutzte mobile Gerät, wie ein Smartphone mit einer entsprechenden Software auszustatten. Eine solche Software ist vorzugsweise so konzipiert, dass eine einfache Nutzereingabe, wie beispielsweise die Betätigung einer einzelnen Taste und/oder Tastenkombination oder auch eine Wischgeste auf dem Display eines Smartphones dazu genutzt wird, die Parameterwerte mit einem Zeitstempel als Markierung zu versehen, zeitgleich die aktuellen Parameterwerte des Hörhilfegerätes zu beziehen und diese für die spätere Verwendung zu speichern.

Weiter bevorzugt besteht die Möglichkeit, dass der Träger des Hörhilfegerätes ein Bedienelement am Hörhilfegerät aktiviert und die Parameterwerte dadurch beispielsweise per Knopfdruck mit einem Zeitstempel bzw. einer entsprechenden Markierung versieht. Wenn der Hörsystemträger dann zu einem späteren Zeitpunkt seinen Blogeintrag verfasst, kann er sich auf diesen Zeitstempel beziehen und den einen entsprechenden Bezug zu dem Zeitstempel beispielsweise in Form eines entsprechenden Links, also als Referenz, in seinen Blogeintrag aufnehmen.

In einer weiter vorteilhaften Ausgestaltung der Erfindung ermöglich das Verfahren eine Unterstützung des Trägers hinsichtlich der akustischen Aufzeichnung von Umgebungsgeräuschen, in welcher ebenfalls Hörsituationen auftreten, die der Träger zu verbessern wünscht. Vorzugsweise werden hierzu die Mikrofone des Hörhilfegerätes genutzt, da sich diese - im Unterschied zum Mikrofon des beispielsweise genutzten Smartphones - üblicherweise immer in einer optimalen Position befinden. Vorzugsweise wird mittels des oder jedes Mikrofons des Hörhilfegerätes der umgebende Schall kontinuierlich in einem Ringspeicher aufgezeichnet. Der Ringspeicher hält zweckmäßigerweise den jeweils aktuellen akustischen Mitschnitt bzw. die Aufzeichnung vor. Hierbei wird, sobald die Speicherkapazität des Ringspeichers ausgeschöpft ist, zweckmäßigerweise die jeweils älteste Aufzeichnung verworfen und durch eine neu eintreffende Aufzeichnung ersetzt.

Wird ein Blogeintrag zeitverzögert zu einer Hörsituation verfasst, wird bevorzugt automatisch eine Kopie des Ringspeichers abgespeichert und für die spätere Verwendung, beispielsweise zu Dokumentationszwecken im Rahmen einer Anpassungssitzung eines beratenden Hörgeräteakustikers genutzt. Weiter bevorzugt wird für den Fall des zeitversetzten Verfassens des Blogeintrags das Setzen des Zeitstempels nicht nur zur Speicherung der aktuellen Parameterwerte, sondern ebenfalls zur Speicherung des akustischen Mitschnittes genutzt.

In einer weiter vorteilhaften Ausführungsform werden nur die Parameterwerte, die durch den Träger des jeweiligen Hörhilfegerätes veränderbar sind, gespeichert. Mit anderen Worten werden nicht alle Parameterwerte eines Hörsystems beim Erstellen des Blogeintrages gespeichert. Dies gilt insbesondere die Parameterwerte, die nur durch den Hersteller des Hörsystems bzw. des Hörhilfegerätes in sinnvoller Art und Weise veränderbar sind. Diese Parameterwerte sind zweckmäßigerweise bereits anfänglich bei der Übergabe des Hörhilfegerätes an den Träger in eine entsprechende Patientendatenbasis eingetragen worden und dort entsprechend abrufbar hinterlegt. Bei modernen Hörsystemen, die mehrere tausend Parameter umfassen, von denen nur ein sehr kleiner Anteil durch den Hörsystemträger veränderbar ist, stellt das eine signifikante Reduktion der Datenmenge der zu übertragenden Parameterwerte dar.

Vorzugsweise werden der Blogeintrag und die dem Blogeintrag zugeordneten Parameterwerte des Hörhilfegerätes auf ein Backend-System übertragen. Unter einem Backend-System wird beispielsweise ein in einer Cloud oder einem Cloud-Rechenzentrum stationiertes System verstanden. Eine Cloud stellt einem Nutzer IT-Infrastrukturen, wie Rechenkapazität, Datenspeicher, Netzkapazitäten oder auch fertige Software über das Internet zur Verfügung, ohne dass diese auf dem lokalen Rechner installiert sein müssen. Besonders bevorzugt erfolgt die Übertragung über das Backend-System an eine audiologische Fachabteilung des jeweiligen Hörgeräteherstellers. Der audiologischen Fachabteilung werden somit die Parameterwerte des Hörhilfegerätes zur Verfügung gestellt.

Um sicherzustellen, dass immer die dem Blogeintrag zugeordneten Parameterwerte des Hörgerätes an das Backend-System übertragen werden, ist es von Vorteil, wenn die Parameterwerte des Hörhilfegerätes mit einem Zeitstempel versehen sind. So können einem verfassten Blogeintrag jeweils die passenden Parameterwerte des Hörgerätes zugeordnet werden und diese gemeinsam an das Back-End-System übertragen werden.

Die Übertragung von der Hörsituation zugeordneten Parameterwerten an das Back-End-System erfolgt in einer vorteilhaften Ausgestaltung automatisch. In einer alternativ bevorzugten Ausgestaltung werden die der Hörsituation zugeordneten Parameterwerte durch den Träger des Hörhilfegerätes an das Back-End-System übertragen. Besonders bevorzugt werden hierbei nur die Parameterwerte des Hörgerätes auf das Backend-System übertragen, die von dem Hörhilfegeräteträger geändert wurden.

Zweckmäßigerweise wird vor der Übertragung des Blogeintrags und der dem Blogeintrag zugeordneten Parameterwerte des Hörgerätes auf das Backend-System ermittelt, ob es sich um einen eine Hörsituation beschreibenden Blogeintrag handelt. Beschreibt der Blogeintrag eine Situation, die für die Hörwahrnehmung des Trägers des Hörhilfegerätes nicht relevant ist, so wird der Blogeintrag nicht weiter analysiert.

Für den Fall, dass es sich bei dem Blogeintrag um einen eine Hörsituation beschreibenden Blogeintrag handelt, wird dieser gemeinsam mit den entsprechenden Parameterwerten des Hörgerätes ausgewertet.

Die Ermittlung, ob es sich um einen eine Hörsituation beschreibenden Blogeintrag handelt, erfolgt vorzugsweise ebenfalls anhand einer sprachlichen Analyse. Besonders von Vorteil ist die Parts-of-Speech ('PoS')-Analyse, bei welcher die Worte auf ihre Grundform zurückgeführt werden. Diese Grundformen werden dann mit einem Wortkatalog verglichen und hieraus entsprechend die Relevanz des Blogeintrags für eine nutzerspezifische Hörwahrnehmung ermittelt.

Zur Ermittlung von der spezifischen Hörsituation angepassten Parameterwerten werden weiter bevorzugt die extrahierten, nutzerspezifischen Änderungswünsche mit in einem Vorschlagssystem hinterlegten Änderungsvorschlägen, denen entsprechende Parameterwerte für ein Hörhilfegerät zugeordnet sind, verglichen. Hierzu wird vorzugsweise jedes Ergebnis der computerlinguistischen Analyse, welches eine subjektive Hörwahrnehmung eines Nutzers beschreibt, einem Katalogeintrag von Hörsituationen und/oder Hörintentionen zugeordnet. Der Katalog von Hörsituationen und/oder Hörintentionen ist hierbei zweckmäßigerweise ein Verzeichnis, welches Hörsituationen und/oder Hörintentionen wie vorstehend beschrieben umfasst.

In einer weiter bevorzugten Ausgestaltung der Erfindung wird zur Ermittlung von der spezifischen Hörsituation angepassten Parameterwerten ein eine Patientendatenbasis umfassendes Vorschlagssystem genutzt. Die Patientendatenbasis beinhaltet vorzugsweise Parameterwerte, die zur Anpassung der Hörhilfegeräte anderer Träger verwendet wurden. Bei der Ermittlung werden zweckmäßigerweise die Parameterwerte von Hörgeräten anderer Patienten mit gleichen oder ähnlichen Eigenschaften, wie beispielsweise der Hörverlust, die geistige Fitness oder die persönlichen Präferenzen berücksichtigt. Im Rahmen der Ermittlung können so Vergleiche mit bereits in der Vergangenheit erfolgten Berechnungen von für eine spezifische Hörsituation passenden Parameterwerten zugrunde gelegt werden.

Zusätzlich werden beim Vergleich der nutzerspezifischen Änderungswünsche mit den in dem Vorschlagssystem hinterlegten Änderungsvorschlägen zweckmäßigerweise zusätzlich die dem Blogeintrag zugeordneten Parameterwerte des Hörgerätes berücksichtigt.

Weiter von Vorteil ist es, wenn die dem Blogeintrag zugeordneten Parameterwerte des Hörgerätes und/oder die angepassten Parameterwerte des Hörgeräts visualisiert werden. Die Visualisierung enthält vorzugsweise Hinweise darüber, wie bereits anderen Trägern in einer ähnlichen Hörsituation und beispielsweise mit einem vergleichbaren Hörverlust, sowie ähnlichen Interessen und kognitiven Fähigkeiten mit entsprechenden Einstellungen ihrer Hörhilfegeräte geholfen wurde.

Die computerlinguistische Analyse umfasst üblicherweise eine syntaktische Analyse, eine semantische Analyse und/oder eine Kontextanalyse des zu analysierenden Textes. Bevorzugt wird im Rahmen der computerlinguistischen Analyse die Satzstruktur des Blogeintrags analysiert. Es handelt sich hierbei um eine syntaktische Analyse, bei welcher der Blogeintrag hinsichtlich der Strukturierung der Sätze und der Satzarten analysiert wird. Als Satzarten werden insbesondere Aussage-, Frage-, Befehlssätze identifiziert. Die Syntax beschreibt hierbei die Regeln, nach denen die Sprachkonstrukte gebildet werden. Die jeweiligen Satzbestandteile (Subjekt, Verb, Objekt, Adverb, Adjektiv) werden dann hinsichtlich ihrer Relevanz für die Hörwahrnehmung und möglichen negativen emotionalen Assoziationen analysiert.

Weiter bevorzugt wird im Rahmen der computerlinguistischen Analyse der Inhalt des Blogeintrags analysiert. Es handelt sich hierbei um die semantische Analyse, die auf Basis der syntaktischen Analyse durchgeführt wird. Die Semantik beschreibt die Bedeutung der Sprachkonstrukte. Der Inhalt eines Textes wird dadurch ermittelt, dass der Bedeutungsgehalt eines bzw. mehrerer Wortes analysiert wird. Hierunter fallen auch die Analyse der Beziehungen zwischen Wörtern einer Sprache, und die Beziehung zwischen einem Wort und einem Objekt. Ebenfalls von Vorteil ist es, wenn im Rahmen der computerlinguistischen Analyse der Kontext des Blogeintrags analysiert wird.

In einer weiter vorteilhaften Ausgestaltung der Erfindung wird ein Weblog in Form von Audiosignalen, insbesondere in Form von Sprachsignalen erfasst. Mit anderen Worten wird im Rahmen der Erfindung die gesprochene Sprache eines Nutzers und/oder dessen Umgebung erkannt und erfasst. Hierzu kann ein Nutzer beispielsweise bereits bei Erleben einer Situation seine situationsbezogenen Eindrücke mittels einer Spracherkennungssoftware unmittelbar aufnehmen. Aus den erfassten Audiosignalen (Sprachsignalen) werden dann ebenfalls nutzerspezifische Änderungswünsche extrahiert, anhand derer einer spezifischen Hörsituation angepasste Parameterwerte ermittelt werden, die dem Nutzer zur Anpassung von der spezifischen Hörsituation zugeordneten Parameterwerten des Hörhilfegeräts angeboten werden.

Um eine entsprechende Auswertung der erfassten Audiosignale zu ermöglichen, werden diese vorzugsweise mittels eines Sprachverarbeitungsmoduls verarbeitet. In dem Sprachverarbeitungsmodul wird die Sprache in dem Audiosignal in Textinformationen umgewandelt. Diese Textinformationen werden dann computerlinguistisch analysiert und wie vorbeschrieben zur Ermittlung einer spezifischen Hörsituation angepasste Parameterwerte weiterverarbeitet.

Insbesondere ist es im Rahmen des Verfahrens gemäß der vorliegenden Erfindung auch möglich, Textinformationen aus Audiosignalen enthaltenen Video-Dateien zu erfassen und diese dann erfindungsgemäß zu analysieren und weiterzuverarbeiten.

Im Folgenden werden Ausführungsbeispiele der Erfindung anhand einer Zeichnung näher erläutert. Dabei zeigen:
- Fig. 1: eine Abfolge von Verfahrensschritten zur automatisierten Ermittlung von Parameterwerten für ein Hörgerät, sowie
- Fig. 2: eine vergleichende Auftragung von zum Zeitpunkt der in einem Blogeintrag beschriebenen Hörsituation aktuellen Parameterwerten eines Hörgerätes mit zur Anpassung vorgeschlagenen Parameterwerten.

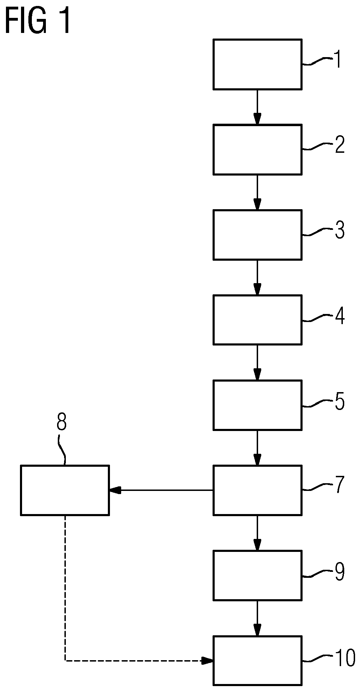

Fig. 1 zeigt eine Abfolge von Verfahrensschritten zur Ermittlung von Parameterwerten für ein Hörgerät. Dem Verfahren liegt vorliegend ein Weblog mit vier Blogeinträgen eines Hörgeräteträgers zugrunde, die dieser beispielsweise mit einem internetfähigen Smartphone verfasst hat. Die Blogeinträge beschreiben Alltagssituationen des Hörgeräteträgers und sind in Fließtext verfasst. Mittels des Verfahrens ist es nun möglich, anhand der Blogeinträge des Hörgeräteträgers automatisiert Parameterwerte, die im Hinblick auf eine bestimmte nutzerspezifische Hörsituation optimiert sind, für das Hörhilfegerät zu ermitteln.

Zu Beginn wird ermittelt, ob es sich bei den Blogeinträgen um für die Hörwahrnehmung relevanten Blogeinträge handelt (Schritt 1). Dies erfolgt mittels einer Parts-of-Speech ('PoS')-Analyse, bei welcher die Worte auf ihre Grundform zurückgeführt werden. Diese Grundformen werden dann mit einem Wortkatalog verglichen und hieraus entsprechend die Relevanz des Blogeintrags für eine nutzerspezifische Hörwahrnehmung ermittelt. Ist der Post nicht relevant, so wird er nicht weiter analysiert.

Für den Fall, dass es die Blogeinträge für die Hörwahrnehmung des Hörgeräteträgers relevant sind, werden diese gemeinsam mit den ihnen zugeordneten Parameterwerten des Hörgerätes an ein Backend-System, vorliegend an eine auf einem Server bzw. in einer Cloud laufendem Vorschlagssystem, übertragen (Schritt 2). In dem Backend-System werden die nutzerspezifischen Blogeinträge dann computerlinguistisch analysiert (Schritt 3).

Ein Weblog eines Hörgeräteträgers kann beispielsweise folgende zeitlich aufeinanderfolgenden Blogeinträge enthalten:
Blogeintrag 1 - Dienstag, 25. August 2015, 18:08 Uhr:
   "War heute mit meinem Schatz zum Einkaufen. So viel, was man jetzt alles hört. Muss mich an die vielen Eindrücke wohl erst einmal gewöhnen."
Blogeintrag 2- Mittwoch, 26. August 2015, 11:26 Uhr:
   "Manchmal nerven die Hörgeräte ein wenig. Beim Geschirrspülen heute Morgen war es ziemlich unangenehm, wenn das Geschirr aneinandergeschlagen ist."
Blogeintrag 3 - Freitag, 28. August 2015, 21:46 Uhr:
   "Wir konnten heute beim Abendessen einen wunderschönen Sonnenuntergang auf der Terrasse genießen. Die neuen Hörgeräte machen sich ganz gut. Hatte trotzdem ein wenig Schwierigkeiten, Hartmut neben all den anderen noch zu verstehen. Habe mal exemplarisch 10 Minuten mitgeschnitten, um es meinem Hörgeräteakustiker zu demonstrieren."
Blogeintrag 4 - Samstag, 29. August 2015, 19:13 Uhr:
   "Höre jetzt viel mehr als vorher. Auch beim Kaffeetrinken heute Nachmittag. Manchmal hör ich schon zu viel, etwa dann, wenn mal ein Löffel an eine Kaffeetasse schlägt. Das hat schon fast wehgetan."

Anhand dieser Blogeinträge können mittels einer computerlinguistischen Analyse Informationen über das subjektive Hörempfinden des Hörgeräteträgers erhalten werden. Im Rahmen einer Syntaxanalyse werden die Blogeinträge hinsichtlich der Strukturierung der Sätze und der Satzarten untersucht. Als Satzarten werden insbesondere Aussage-, Frage-, Befehlssätze identifiziert. Die jeweiligen Satzbestandteile (Subjekt, Verb, Objekt, Adverb, Adjektiv) werden dann hinsichtlich ihrer Relevanz für die Hörwahrnehmung und möglichen negativen emotionalen Assoziationen analysiert.

In Blogeintrag 1 beschreibt der Hörgeräteträger allgemein die Situation beim Einkaufen. Hier sind keine positiven und/oder negativen Emotionen oder audiologisch relevante Inhalte zu entnehmen, eine computerlinguistische Analyse des Blogeintrags erfolgt nicht.

Im zweiten Blogeintrag hingegen beschreibt der Hörgeräteträger eine unerwünschte Hörsituation von audiologischer Relevanz. Dieser Blogeintrag wird einer computerlinguistischen Analyse unterzogen. Es wird deutlich, dass sich der Hörgeräteträger durch die Geräuschkulisse beim Geschirrspülen gestört fühlt ("nerven, unangenehm"). Diese negativen Gefühle werden mit dem "Aneinanderschlagen" des "Geschirrs", sowie mit den Hörgeräten des Verfassers in Zusammenhang gebracht.

Blogeintrag 3 beschreibt ebenfalls negative Empfindungen des Hörgeräteträgers in einer weiteren von diesem erlebten Hörsituation. Diesem dritten Eintrag ist zu entnehmen, dass der Hörgeräteträger seinen Gesprächspartner Hartmut offensichtlich nicht immer richtig verstehen konnte, da die Umgebungsgeräusche ("neben all den anderen") offensichtlich zu laut waren. Einen Mitschnitt des Gespräches will er deswegen seinem Hörgeräteakustiker vorspielen. Ein solcher Mitschnitt kann dann bei der Ermittlung angepasster Hörgeräteparameter berücksichtigt werden.

Der folgende Blogeintrag 4 zeigt, dass nach dem Besuch beim Akustiker offensichtlich eine Verbesserung der Hörwahrnehmung erreicht werden konnte. Diese scheint jedoch nun so gut zu sein, dass sich der Hörgeräteträger erneut gestört fühlt ("zu viel hören", "Löffel", "Kaffeetasse" "schlagen").

Auf Basis der syntaktischen Analyse der Blogeinträge erfolgt eine semantische Analyse. Im Rahmen der semantischen Analyse wird das Ergebnis der syntaktischen Analyse, insbesondere die Beziehungen der Worte untereinander auf die Wahrnehmungen und Wünsche des Nutzers hin analysiert. Als Ergebnis liegt dann beispielsweise vor, dass der Nutzer eine positive Wahrnehmung hatte, was aus der Beziehung zwischen "Sonnenuntergang" und "genossen" hervorgeht. Diese Wahrnehmung hat jedoch keinen Bezug zu der Hörwahrnehmung des Trägers des Hörhilfegerätes und wird entsprechend nicht weiter analysiert.

Die Beziehungen der Worte "Schwierigkeiten" mit "Hartmut verstehen", sowie "unangenehm" mit "Geschirr aneinanderschlagen" und "zu viel" mit "Löffel schlägt" hingegen geben Aufschluss darüber, dass der Verfasser negative Wahrnehmungen hatte, die mit seiner Hörwahrnehmung zusammenhängen, so dass für diese eine kompensierende Maßnahme aufgefunden werden sollte. Inhaltlich sind die Beschwerden bezüglich des Hörempfindens gleichbedeutend mit Absichten bezüglich des Hörens, also mit Hörintentionen:
Hartmut (Eigenname) ist eine Person, die es gilt, besser zu verstehen (Sprachverstehen). Das Geräusch von aneinander schlagendem Geschirr soll reduziert werden. Die Schallimpulse, die vom Löffelschlagen ausgehen, sollen eliminiert werden. Weiter können mittels der semantischen Analyse direkt formulierte Wünsche an das Hörempfinden extrahiert werden. So kann beispielsweise aus einem Blogeintrag "Ich wünschte mir, in dem Konzert den Bass noch besser zu hören" die Wortverbindung "Bass" mit "besser hören" gewonnen werden - was zugleich die Hörintention ist.

Die Ergebnisse der computerlinguistischen Analyse und insbesondere die Ergebnisse der semantischen Analyse werden nun auf solche Ergebnisse reduziert, die auf die subjektive Hörwahrnehmung des Hörsystemträgers gerichtet sind (Schritt 4).

Die Ergebnisse werden also auf solche Ergebnisse gefiltert, die für das subjektive Hören des Hörsystemträgers relevant sind. In den beispielhaft beschriebenen Blogeinträgen würde also der Anteil über die Wahrnehmung des Sonnenunterganges (Blogeintrag 3) herausgefiltert werden, da diese Wahrnehmung nichts mit dem Hören zu tun hat. Die herausgefilterten Ergebnisse beschreiben somit die subjektive Hörwahrnehmung respektive die Hörintention des Hörsystemträgers.

Zu den auf die subjektive Hörwahrnehmung des Hörgeräteträgers gerichteten, reduzierten Ergebnissen werden nun nutzerspezifische Änderungsmaßnahmen gewonnen, die speziell die Wünsche und/oder Beschwerden des Hörsystemträgers berücksichtigen.

Hierzu werden die auf die subjektive Hörwahrnehmung des Hörgeräteträgers gerichteten, reduzierten Ergebnisse der computerlinguistischen Analyse mit in einem Vorschlagssystem hinterlegten Änderungsvorschlägen, denen entsprechende Parameterwerte für ein Hörhilfegerät zugeordnet sind, verglichen (Schritt 5). Das Vorschlagssystem umfasst hierzu eine Pateientendatenbasis, in welcher als Änderungsvorschläge Parameterwerte, die zur Anpassung der Hörgeräte anderer Hörgeräteträger in entsprechenden Hörsituationen verwendet wurden, hinterlegt sind.

Hierbei handelt es sich beispielsweise um Katalogeinträge von Hörintentionen, also einem Verzeichnis von Intentionen, die für den Vorgang des subjektiven Hörens bekannt oder gängig sind. Als Hörintentionen werden beispielsweise Sprachverstehen, Musikgenuss, Richtungshören und die Unterdrückung von Windgeräuschen berücksichtigt. Der Katalog umfasst bevorzugt auch Parameterwerte, die Umgebungsgeräuschen zugeordnet sind, Beispielhaft hierfür sind Situationen im Straßenverkehr, auf Cocktailpartys, im Kino, vor dem Fernseher, im Konzertsaal, in der Natur/Outdoor, am Telefon oder im Auto. Vorzugsweise sind auch Informationen über den akustischen Hintergrund in dem Katalog enthalten, wie etwa Hall oder Lautstärke und Art des umgebenden Schalls, wie Musik, Stimmen, Störgeräusche durch Motoren, Maschinen, Fahrzeuge und ähnliches.

Das Vorschlagssystem wird somit im Rahmen der Ermittlung geänderter Parameterwerte als Vergleichsdatenbank genutzt, um die auf die subjektive Hörwahrnehmung des Hörgeräteträgers gerichteten, reduzierten Ergebnisse der computerlinguistischen Analyse mit bereits in der Vergangenheit erfolgten und nun hinterlegten Berechnungen zu vergleichen.

Jedem nutzerspezifischen Änderungswunsch - extrahiert aus den auf die subjektive Hörwahrnehmung des Nutzers gerichteten, reduzierten Ergebnissen - wird nun ein entsprechender Katalogeintrag, also ein Änderungsvorschlag, der dem nutzerspezifischen Änderungswunsch entspricht, zugeordnet (Schritt 6). Bezug nehmend auf die vorbeschriebenen Blogeinträgen sind als Katalogeinträge das "Aneinanderschlagen von Geschirr", das "Verstehen einer Person" und ein löffel schlagen" in dem Vorschlagssystem hinterlegt. Gemäß Blogeintrag 2 wird beispielsweise deutlich, dass das Aneinanderschlagen des Geschirrs unangenehm für den Hörgeräteträger ist. Dieses Ergebnis wird nun dem Katalogeintrag "Aneinanderschlagen von Geschirr" zugeordnet.

Für jedes erhaltene Paar eines nutzerspezifischen Änderungswunsches und eines Katalogeintrages werden dann - unter Einbeziehung der Ergebnisse aus der semantischen Analyse und der Kontextanalyse - für die der spezifische Hörsituation angepasste Parameterwerte ermittelt (Schritt 7). Diese angepassten Parameterwerte entsprechen dann den nutzerspezifischen Änderungswünschen des Hörgeräteträgers.

Der neue Parametersatz, also die anhand der nutzerspezifischen Änderungswünsche der jeweiligen Hörsituation angepassten Parameterwerte für das Hörgerät, werden entweder dem Hörgeräteträger (Schritt 8) und/oder einem betreuenden Hörgeräteakustiker (Schritt 9) zur weiteren Verwendung oder Nutzung angeboten. Wenn die angepassten Parameterwerte dem Träger zur Programmierung in sein Hörhilfegerät angeboten werden, so hat dieser die Möglichkeit, die entsprechenden Vorschläge wahlweise zu übernehmen oder zu verwerfen.

Alternativ kann die Ermittlung der angepassten Parameterwerte auch wie im Folgenden beschrieben erfolgen. Zusätzlich zu den Hörintention und den aktuellen Parameterwerten können Befunddaten des Nutzers ausgewertet werden. Diese Berechnungsalgorithmen nutzen Befunddaten des Hörhilfegeräteträgers, Parameterwerte, sowie nutzerspezifische Änderungswünsche als Eingabedaten.

Die Ermittlung der neu vorgeschlagenen Parameterwerte erfolgt also mittels vom Hörhilfegerätehersteller entworfenen Berechnungsalgorithmen, die nun zusätzlich die Befunddaten des Patienten einbeziehen. Die Berechnungsalgorithmen sind insbesondere in dem Vorschlagssystem hinterlegt. Dadurch sind die Ergebnisse entsprechend der Nutzereigenschaften differenziert, so das beispielsweise. für Personen mit italienischer Muttersprache zum Sprachverstehen eine andere Frequenzgangsformung angeboten werden kann, als für Personen mit deutscher Muttersprache.

Grundsätzlich kommen neben dem Hörverlust (als allgemein bekanntes und wesentlichstes Merkmal) oder einer Hörverlustklassifikation verschiedenste Befundmerkmale wie das Alter; das Geschlecht; eine Maßzahl für die geistige Fitness; Blutdruckwerte; die Angabe, ob die Muttersprache eine sogenannte "tonale" Sprache ist (z.B. Chinesisch) in Betracht.

Bei einer Beratungssitzung und/oder einer Anpassungssitzung mit einem Hörgeräteakustiker (HCP, Hearing Care Professional) stehen diesem die bisher erhobenen Daten, also der Weblog bzw. der oder die Blogeinträge des Hörgeräteträgers, die zum Zeitpunkt der erlebten Hörsituation aktuellen Parameterwerte des Hörgerätes, sowie die mittels des Vorschlagssystem berechneten angepassten Parameterwerte zur Verfügung.

Die zum Zeitpunkt der erlebten Hörsituation aktuellen Parameterwerte des Hörgerätes, sowie die angepassten Parameterwerte werden dem Hörgeräteakustiker zusätzlich visualisiert. Die Visualisierung enthält hierbei insbesondere Hinweise darüber, wie bereits anderen Hörgeräteträgern mit einem vergleichbaren Hörverlust und beispielsweise vergleichbaren Interessen und kognitiven Fähigkeiten für die diese Hörintention relevant ist, mit entsprechenden Hörgeräteeinstellungen geholfen wurde.

Dem Hörgeräteakustiker wird dann die Möglichkeit gegeben, die neu angepassten Vorschlagswerte zu übernehmen oder erneut zu modifizieren und erst dann zu übernehmen. Hierbei kann er seine eigene berufliche Erfahrung, seine Einschätzung der in der Anpassungssitzung geschilderten Eindrücke des Hörgeräteträgers, einen eigenen Vergleich mit neu berechneten Parameterwerten für Hörgeräteträger mit ähnlichen Eigenschaften in die angepassten Parameterwerte einfließen lassen. Abgeschlossen wird der Prozess dann durch ein Übertragen der neuen Parameterwerte in das Hörhilfegerät des Patienten (Schritt 10).

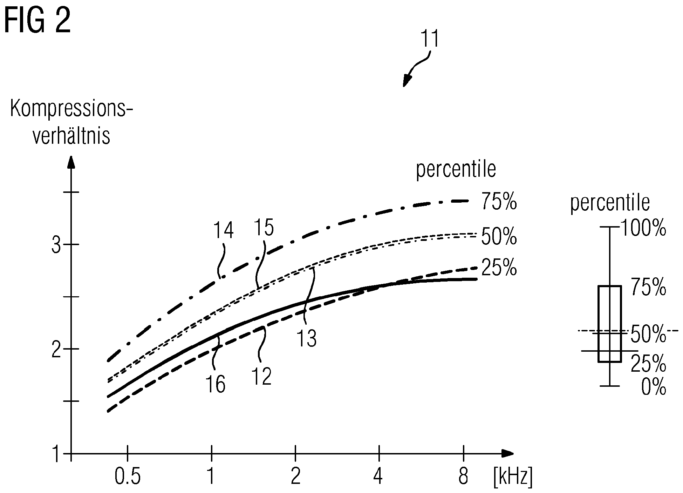

Fig. 2 zeigt eine Auftragung 11, in der die aktuellen Parameterwerte eines Hörgerätes, sowie die mittels des Vorschlagssystems berechneten angepassten Parameterwerte visualisiert sind. Aufgetragen ist hier das Kompressionsverhältnis gegen die Frequenz [kHz]. Die Auftragung zeigt drei Perzentilen 12, 13, 14, die als Maß für die Streuung einer statistischen Verteilung dienen und auf den Werten großer Vergleichskollektive beruhen. Beispielhaft an der 50 %-Perzentile 13 bei 1 kHz erläutert, bedeutet dies, dass bei 50 % der Hörgeräte ein Kompressionsverhältnis oberhalb von 2,3 eingestellt ist, 50 % der Hörgeräte haben ein Kompressionsverhältnis unterhalb von 2,3.

Der Hörgeräteakustiker und dem Hörgeräteträger wird vorliegend als angepasster Parameterwerte ein Kompressionsverhältnis von etwas oberhalb 2,3, also etwas oberhalb der 50 % - Perzentile angeboten, der anhand der nutzerspezifischen Änderungswünsche von dem Vorschlagssystem als der spezifischen Hörsituation angemessenen Parameterwerte ermittelt wurde (Kurve 15). Der Wert weicht von den ursprünglichen Parameterwerten ab, also den Parameterwerten, die zum Zeitpunkt der erlebten Hörsituation in dem Hörhilfegerät eingestellt waren (Kurve 16). Hier liegt das Kompressionsverhältnis bei 1 kHz bei einem Wert von etwa 2,1.

Die angepassten Parameterwerte können nun in das Hörhilfegerät einprogrammiert werden. Der Hörgeräteträger kann dann in einer vergleichbaren Situation testen, ob und inwieweit die dann aktuellen Einstelllungen der Hörgeräteparameter seiner gewünschten Hörwahrnehmung entsprechen. Sollten weitere Änderungen gewünscht sein, so können erneut geänderte Parameterwerte ermittelt und die Hörgeräteeinstellungen entsprechend angepasst werden.

### Bezugszeichenliste

- 1: Verfahrensschritt
- 2: Verfahrensschritt
- 3: Verfahrensschritt
- 4: Verfahrensschritt
- 5: Verfahrensschritt
- 7: Verfahrensschritt
- 8: Verfahrensschritt
- 9: Verfahrensschritt
- 10: Verfahrensschritt
- 11: Auftragung
- 12: 25 % - Perzentile
- 13: 50 % - Perzentile
- 14: 75 % - Perzentile
- 15: Kurve der angepassten/vorgeschlagenen Parameterwerte
- 16: Kurve der ursprünglichen Parameterwerte

## Patentansprüche

1. Verfahren zur automatisierten Ermittlung von Parameterwerten eines Hörhilfegerätes,
- wobei ein nutzerspezifischer Blogeintrag in einem Weblog computerlinguistisch analysiert wird,
- wobei die Ergebnisse der computerlinguistischen Analyse auf solche Ergebnisse reduziert werden, die auf die subjektive Hörwahrnehmung des Nutzers gerichtet sind,
- wobei die auf die subjektive Hörwahrnehmung des Nutzers gerichteten, reduzierten Ergebnisse einer spezifischen Hörsituation zugeordnet werden,
- wobei aus den auf die subjektive Hörwahrnehmung des Nutzers gerichteten, reduzierten Ergebnissen nutzerspezifische Änderungswünsche extrahiert werden, und
- wobei anhand der nutzerspezifischen Änderungswünsche der spezifischen Hörsituation angepasste Parameterwerte ermittelt werden, die dem Nutzer zur Anpassung von der spezifischen Hörsituation zugeordneten Parameterwerten des Hörhilfegeräts angeboten werden.

2. Verfahren nach Anspruch 1, wobei beim Erstellen des nutzerspezifischen Blogeintrags die dem Blogeintrag zugeordneten Parameterwerte des Hörhilfegerätes gespeichert werden.

3. Verfahren nach Anspruch 1 oder 2, wobei der Blogeintrag und die diesem zugeordneten Parameterwerte des Hörhilfegerätes auf ein Backend-System übertragen werden.

4. Verfahren nach Anspruch 3, wobei vor der Übertragung des Blogeintrags und der diesem zugeordneten Parameterwerte des Hörhilfegerätes auf das Backend-System ermittelt wird, ob es sich um einen eine Hörsituation beschreibenden Blogeintrag handelt.

5. Verfahren nach einem der vorhergehenden Ansprüche, wobei zur Ermittlung von der spezifischen Hörsituation angepassten Parameterwerten die extrahierten, nutzerspezifischen Änderungswünsche mit in einem Vorschlagssystem hinterlegten Änderungsvorschlägen, denen entsprechende Parameterwerte für ein Hörhilfegerät zugeordnet sind, verglichen werden.

6. Verfahren nach Anspruch 5, wobei ein eine Pateientendatenbasis umfassendes Vorschlagssystem zur Ermittlung von der spezifischen Hörsituation angepassten Parameterwerten genutzt wird.

7. Verfahren nach Anspruch 5 oder 6, wobei beim Vergleich der nutzerspezifischen Änderungswünsche mit den in dem Vorschlagssystem hinterlegten Änderungsvorschlägen zusätzlich die dem Blogeintrag zugeordneten Parameterwerte des Hörhilfegerätes berücksichtigt werden.

8. Verfahren nach einem der vorhergehenden Ansprüche, wobei die dem Blogeintrag zugeordneten Parameterwerte des Hörhilfegeräts und/oder die angepassten Parameterwerte des Hörhilfegeräts visualisiert werden.

9. Verfahren nach einem der vorhergehenden Ansprüche, wobei im Rahmen der computerlinguistischen Analyse die Satzstruktur des Blogeintrags analysiert wird.

10. Verfahren nach einem der vorhergehenden Ansprüche, wobei im Rahmen der computerlinguistischen Analyse der Inhalt des Blogeintrags analysiert wird.

11. Verfahren nach einem der vorhergehenden Ansprüche, wobei ein Weblog in Form von Audiosignalen, insbesondere in Form von Sprachsignalen erfasst wird.

12. Verfahren nach Anspruch 11, wobei die erfassten Audiosignale mittels eines Spracherkennungsmoduls verarbeitet werden.
